# EUROPEAN PATENT APPLICATION

(11) **EP 4 234 604 A1**
(43) Date of publication of application: **30.08.2023**
(21) Application number: 21883297.0
(22) Date of filing: 21.10.2021
(51) Int. Cl.: C08G 63/06, C08L 67/04

(54) **PHA COMPOSITION AND METHOD FOR MANUFACTURING SAME**

(30) Priority: 23.10.2020 KR 20200137921
(71) Applicant: CJ Cheiljedang Corporation, Seoul 04560 (KR)
(72) Inventor: SHIM, Yoo Kyoung, Seoul 04560 (KR); LEE, Eun-Hye, Seoul 04560 (KR); CHANG, Dong-Eun, Seoul 04560 (KR)
(74) Representative: Schiweck Weinzierl Koch Patentanwälte Partnerschaft mbB
(86) International application number: PCT/KR2021/014826
(87) International publication number: WO 2022/086229

(57) **Abstract**

The present invention relates to a biodegradable plastic polyhydroxyalkanoate (PHA) composition having improved adhesive properties and mechanical properties, and a method for manufacturing same. Specifically, according to the present invention, it is possible to provide a composition having excellent adhesive properties with respect to a plastic material by improving the adhesive properties by means of a single component of biodegradable PHA without requiring additional chemical substances. In addition, it is possible to provide a composition of which mechanical properties as well as adhesive properties are improved. Therefore, it is possible to manufacture products which are eco-friendly and harmless to the human body, by easily applying the composition to products requiring biodegradable properties along with adhesive properties and mechanical properties.

## Description

### Technical Field

The present invention relates to a biodegradable plastic polyhydroxyalkanoate (PHA) composition having improved adhesive properties and mechanical properties, and a method for manufacturing same.

This application claims the benefit of priority from Korean Patent Application No. 10-2020-0137921, filed on October 23, 2020, the entire disclosure of which is incorporated by reference herein.

### Background Art

Polyhydroxyalkanoates (PHAs) are biodegradable plastics which can be used to make, without limitation, films (e.g., packaging films, agricultural films, mulch film), golf tees, caps and closures, agricultural supports and stakes, paper and board coatings (e.g., for cups, plates, boxes, etc), thermoformed products (e.g., trays, containers, yogurt pots, plant pots, noodle bowls, moldings, etc.), housings (e.g., for electronic items) bags (e.g., trash bags, grocery bags, food bags, compost bags, etc.), hygiene articles (e.g., diapers, feminine hygiene products, incontinence products, disposable wipes, etc.) and coatings for pelleted products (e.g., pelleted fertilizer, herbicides, pesticides, seeds, etc.).

PHAs have also been used to develop biomedical devices including sutures, repair devices, repair patches, slings, cardiovascular patches, orthopedic pins, adhesion barriers, stents, guided tissue repair/regeneration devices, articular cartilage repair devices, nerve guides, tendon repair devices, bone marrow scaffolds, and wound dressings.

On the other hand, Korean Patent Application No. 10-2020-0046051 discloses a polyester specified with a molecular weight of PHA and a content of 4HB, but it is difficult to improve adhesive properties with the disclosed technical configuration.

In addition, as chemical mixtures are generally incorporated to impart adhesive properties to biodegradable plastics, there is a problem that it is difficult to biodegrade, causing environmental pollution. In addition, in order to be used as a material for absorbing and relieving expansion, vibration, and deformation between elements like a sealant, mechanical properties such as tensile strength and elongation characteristics as well as adhesive properties must be appropriately imparted.

Therefore, there is a need for a biodegradable adhesive composition that is biodegradable as an eco- and human-friendly composition and has adhesive properties at the same time by using only a biodegradable plastic material.

### Detailed Description of the Invention

### Technical Problem

An object of the present invention is to provide a polyhydroxyalkanoate (PHA) composition having improved adhesive properties and mechanical properties as well as biodegradable properties.

In addition, it is to provide a method for manufacturing the PHA composition.

### Solution to Problem

In order to solve the above problems, the present invention provides a polyhydroxyalkanoate (PHA) composition, wherein the PHA comprises
5 to 80% of 3-hydroxybutyrate (3HB); and
5 to 80% of 4-hydroxybutyrate (4HB),
wherein the PHA is poly-3-hydroxybutyrate-co-4-hydroxybutyrate (P3HB-4HB), and
the PHA has a weight average molecular weight of Mw 130,000 to 700,000 and a number average molecular weight of Mn 60,000 to 350,000.

According to one embodiment, the PHA may comprise two or more PHAs having different 4HB contents.

According to one embodiment, the adhesive strength of the PHA composition according to the present invention may be 1 kg/in or more according to the ASTM D1876 evaluation standard.

In addition, the tensile strength may be 0.1 Mpa or more according to the ASTM D638 evaluation standard.

In addition, the elongation may be 200% or more according to the ASTM D638 evaluation standard.

According to one embodiment, the composition according to the present invention can be used for sealant purposes.

According to another embodiment of the present invention, there is provided a method for manufacturing the PHA composition as described above.

According to one embodiment, the manufacturing method of the present invention may comprise mixing two or more PHAs having different 4HB contents.

According to one embodiment, the method comprises mixing two PHAs having different 4HB contents in a weight ratio of 10:90 to 90:10.

Details of other embodiments of the present invention are included in the detailed description below.

### Effect of the Invention

According to the present invention, it is possible to provide a composition having improved adhesive properties and mechanical properties while having biodegradable properties.

Specifically, it is possible to provide a composition having excellent adhesive properties with a plastic material by improving adhesive properties with only a biodegradable PHA component without requiring additional chemicals. In addition, it is possible to provide a composition having improved mechanical properties such as tensile strength and elongation as well as adhesive properties.

Therefore, it is possible to provide products eco-friendly and harmless to human body by easily applying the composition to products requiring the biodegradable properties as well as adhesive properties and mechanical properties.

### Best Mode for Carrying out the Invention

The present invention may have various modification and various embodiments and specific embodiments will be described in detail. However, this is not intended to limit the present invention to specific embodiments, and should be understood to include all modifications, equivalents, and substitutes included in the spirit and scope of the present invention. In describing the present invention, if it is determined that a detailed description of a related known technology may obscure the gist of the present invention, the detailed description thereof will be omitted.

Unless otherwise specified, the expression "to" in relation to a number used herein is used as an expression including the corresponding numerical value. Specifically, for example, the expression "1 to 2" is meant to include all numbers between 1 and 2 as well as 1 and 2.

Unless the context indicates otherwise, singular expressions are intended to include the plural expressions.

The term "PHA copolymer" as used herein means a polymer composed of at least two different hydroxy alkanoic acid monomers.

Hereinafter, a polyhydroxyalkanoate (PHA) composition according to an embodiment of the present invention and a method for manufacturing the same will be described in more detail.

Specifically, the present invention provides a polyhydroxyalkanoate (PHA) composition, wherein the PHA comprises
5 to 80% of 3-hydroxybutyrate (3HB); and
5 to 80% of 4-hydroxybutyrate (4HB),
wherein the PHA is poly-3-hydroxybutyrate-co-4-hydroxybutyrate (P3HB-4HB), and
the PHA has a weight average molecular weight of Mw 130,000 to 700,000 and a number average molecular weight of Mn 60,000 to 350,000.

According to one embodiment, the PHA has a 3HB content of 5 to 80%, for example, 5% or more, 10% or more, 20% or more, and for example, 80% or less, 60% or less, 50% or less.

According to one embodiment, the PHA has a 4HB content of 5 to 80%, for example, 5% or more, 10% or more, and for example, 80% or less, 70% or less, 60% or less, 50% or less.

According to one embodiment, the PHA of the present invention may have a weight average molecular weight of Mw 130,000 to 700,000, for example Mw 130,000 or more, Mw 150,000 or more, Mw 200,000 or more, Mw 250,000 or more, and for example, Mw 700,000 or less, and Mw 650,000 or less.

In addition, the PHA may have a number average molecular weight of Mn 60,000 to 350,000, for example Mn 60,000 or more, Mn 70,000 or more, Mn 80,000 or more, and for example Mn 350,000 or less, Mn 330,000 or less, Mn 300,000 or less.

According to one embodiment, the PHA may comprise two or more PHAs having different 4HB contents. Specifically, for example, two PHAs having different 4HB contents may be mixed in a weight ratio of 10:90 to 90:10, for example, 30:70 to 70:30. Specifically, for example, a PHA mixture may include a mixture of PHA containing 10 g of 10% 4HB and PHA containing 90 g of 50% 4HB.

According to one embodiment, the PHA may include a combination of crystalline PHA and amorphous PHA. For example, the crystalline PHA may have a 4HB content of 15% or less, and the amorphous PHA may have a 4HB content of 20 to 80%. Specifically, for example, 30 g of a crystalline PHA polymer having a 4HB content of 10% may be mixed with 70 g of an amorphous PHA polymer having a 4HB content of 50%.

According to one embodiment, the PHA composition according to the present invention may have an adhesive strength of 1 kg/in or more, or 1.5 kg/in or more, or 2 kg/in or more according to the ASTM D1876 evaluation standard.

In addition, the PHA composition of the present invention may have a tensile strength of 0.1 Mpa or more, for example, 0.12 Mpa or more, or 0.14 Mpa or more according to the ASTM D638 evaluation standard.

In addition, the PHA composition of the present invention may have an elongation of 200% or more, for example, 220% or more according to the ASTM D638 evaluation standard.

According to another embodiment of the present invention, there is provided a method for manufacturing the polyhydroxyalkanoate (PHA) composition, wherein the PHA comprises
5 to 80% of 3-hydroxybutyrate (3HB); and
5 to 80% of 4-hydroxybutyrate (4HB),
wherein the PHA is poly-3-hydroxybutyrate-co-4-hydroxybutyrate (P3HB-4HB), and
the PHA has a weight average molecular weight of Mw 130,000 to 700,000 and a number average molecular weight of Mn 60,000 to 350,000.

According to one embodiment, the manufacturing method of the present invention may comprise mixing two or more PHAs having different 4HB contents.

The composition according to the present invention has excellent adhesion to plastic materials, and in particular, excellent adhesion to polyester-based materials. Therefore, it can be made into, for example, a hot melt material, a hot sealing adhesive material, or the like. In addition, since it has improved mechanical properties such as tensile strength and elongation properties as well as adhesive properties, it can be made into a sealant, for example, a sealant film material. Unlike conventional materials such as LDPE and EVA, the composition of the present invention does not contain additives such as inorganic particles, and therefore when using additives for adjusting physical properties, it is possible to overcome the physical property limitations of conventional sealant compositions.

Hereinafter, embodiments of the present invention will be described in detail so that those of ordinary skilled in the art can easily carry out the present invention. However, the present invention may be embodied in several different forms and is not limited to the embodiments described herein.

### Example 1

Poly-3-hydroxybutyrate-co 50% 4-hydroxybutyrate (Mw 450,000, Mn 223,000) was used to prepare a sheet specimen with a thickness of 50 µm and a size of 10 X 10 cm using a hot presser at 140 °C and 10 bar. That is, the P3HB-co-4HB copolymer consists of 50% of 3HB monomers and 50% of 4HB monomers in the total polymer structure.

Mechanical properties such as tensile strength and elongation of the prepared specimen was measured according to the ASTM D638 evaluation standard. After fixing the sheet specimen between transparent PET films having a thickness of 50 µm, a 3-layered film was prepared through laminating at 120 °C to measure adhesive strength according to the ASTM D1876 evaluation standard.

### Example 2

A sheet specimen was prepared in the same manner as in Example 1, except that poly-3-hydroxybutyrate-co 50% 4-hydroxybutyrate (Mw 360,000 Mn 149,000) was used in specimen preparation.

For the prepared specimen, mechanical properties and adhesive strength were measured in the same manner as in Example 1.

### Example 3

A sheet specimen was prepared in the same manner as in Example 1, except that poly-3-hydroxybutyrate-co 50% 4-hydroxybutyrate (Mw 290,000, Mn 145,000) was used in specimen preparation.

For the prepared specimen, mechanical properties and adhesive strength were measured in the same manner as in Example 1.

### Example 4

A sheet specimen was prepared in the same manner as in Example 1, except that poly-3-hydroxybutyrate-co 33% 4-hydroxybutyrate (Mw 400,000 Mn 160,000) was used in specimen preparation.

For the prepared specimen, mechanical properties and adhesive strength were measured in the same manner as in Example 1.

### Example 5

A sheet specimen was prepared in the same manner as in Example 1, except that poly-3-hydroxybutyrate-co 33% 4-hydroxybutyrate (Mw 500,000, Mn 270,000) was used in specimen preparation.

For the prepared specimen, mechanical properties and adhesive strength were measured in the same manner as in Example 1.

### Example 6

A sheet specimen was prepared in the same manner as in Example 1, except that poly-3-hydroxybutyrate-co 33% 4-hydroxybutyrate (Mw 640,000, Mn 320,000) was used in specimen preparation.

For the prepared specimen, mechanical properties and adhesive strength were measured in the same manner as in Example 1.

### Example 7

A sheet specimen was prepared in the same manner as in Example 1, except that poly-3-hydroxybutyrate-co 28% 4-hydroxybutyrate (Mw 330,000, Mn 147,000) was used in specimen preparation.

For the prepared specimen, mechanical properties and adhesive strength were measured in the same manner as in Example 1.

### Example 8

A sheet specimen was prepared in the same manner as in Example 1, except that poly-3-hydroxybutyrate-co 28% 4-hydroxybutyrate (Mw 550,000 Mn 220,000) was used in specimen preparation.

For the prepared specimen, mechanical properties and adhesive strength were measured in the same manner as in Example 1.

### Example 9

A sheet specimen was prepared in the same manner as in Example 1, except that a material obtained by compounding poly-3-hydroxybutyrate-co 10% 4-hydroxybutyrate (Mw 600,000 Mn 300,000) and poly-3-hydroxybutyrate-co 50% 4-hydroxybutyrate (Mw 600,000, Mn 300,000) in a weight ratio of 3:7 was used in specimen preparation.

For the prepared specimen, mechanical properties and adhesive strength were measured in the same manner as in Example 1.

Table 1 shows the mechanical properties and adhesive strength measurement results of Examples 1 to 9.

**[Table 1]**

| | Thickness (*µ*m) | Tensile strength (Mpa) | Elongation (%) | Adhesive strength (kg/in) |
|---|---|---|---|---|
| Example 1 | 40-60 | 0.2 | 663 | 3.3 |
| Example 2 | 40-60 | 0.16 | 482 | 3.5 |
| Example 3 | 40-60 | 0.14 | 328 | 2.3 |
| Example 4 | 40-60 | 0.91 | 1246 | 2.5 |
| Example 5 | 40-60 | 0.84 | 664 | 2.2 |
| Example 6 | 40-60 | 1.51 | 783 | 2.8 |
| Example 7 | 40-60 | 2.84 | 1661 | 3.7 |
| Example 8 | 40-60 | 8.32 | 1378 | 2.4 |
| Example 9 | 40-60 | 2.56 | 234 | 2.8 |

Since all of the composition according to the present invention exhibited the adhesive strength of 2 kg/in or more, it was confirmed they were suitable for use as a biodegradable plastic adhesive or sealant. In addition, the above results represent the evaluation values of physical properties for the PHA composition according to the present invention alone, the above physical properties can be further enhanced when adding commonly used additives.

As described above, according to the present invention, sufficient adhesive properties can be achieved by using the composition of the present invention alone without additional chemicals. Therefore, it is possible to provide products eco-friendly and harmless to human body by easily applying the composition to products requiring the biodegradable properties as well as adhesive properties and mechanical properties.

The above description is merely illustrative of the technical idea of the present invention, and various modifications and variations can be made by those skilled in the art without departing from the essential characteristics of the present invention.

In addition, the embodiments disclosed in the present invention are intended not to limit but to explain the technical idea of the present invention, and the scope of the technical idea of the present invention is not limited thereto. The scope to which the present invention is intended to be protected should be construed by the following claims, and all technical ideas within the equivalent thereto should be construed as being included in the scope of the present invention.

## Claims

1. A polyhydroxyalkanoate (PHA) composition, wherein the PHA comprises
5 to 80% of 3-hydroxybutyrate (3HB); and
5 to 80% of 4-hydroxybutyrate (4HB),
wherein the PHA is poly-3-hydroxybutyrate-co-4-hydroxybutyrate (P3HB-4HB), and
the PHA has a weight average molecular weight of Mw 130,000 to 700,000 and a number average molecular weight of Mn 60,000 to 350,000.

2. The PHA composition according to claim 1, wherein the PHA comprises two or more PHAs having different 4HB contents.

3. The PHA composition according to claim 1, wherein the composition has an adhesive strength of 1 kg/in or more according to the ASTM D1876 evaluation standard.

4. The PHA composition according to claim 1, wherein the composition has a tensile strength of 0.1 Mpa or more according to the ASTM D638 evaluation standard.

5. The PHA composition according to claim 1, wherein the composition has an elongation of 200% or more according to the ASTM D638 evaluation standard.

6. The PHA composition according to claim 1, wherein the composition is used for sealant purposes.

7. A method for manufacturing the PHA composition for manufacturing the composition according to claim 1.

8. The method for manufacturing the PHA composition according to claim 7, wherein the method comprises mixing two or more PHAs having different 4HB contents.

9. The method for manufacturing the PHA composition according to claim 7, wherein the method comprises mixing two PHAs having different 4HB contents in a weight ratio of 10:90 to 90:10.
